# EUROPÄISCHE PATENTSCHRIFT

(11) **EP 0 474 080 B1**
(45) Veröffentlichungstag und Bekanntmachung des Hinweises auf die Patenterteilung: **14.07.1993**
(21) Anmeldenummer: 91114251.1
(22) Anmeldetag: 25.08.1991
(51) Int. Cl.: A01K 1/02

(54) **Sperrboxenanordnung für Vieh**
Animal feeding pen
Cage réfectoire pour animaux

(30) Priorität: 03.09.1990 DE 9012571 U
(43) Veröffentlichungstag der Anmeldung: 11.03.1992
(73) Patentinhaber: RUDOLF HÖRMANN GmbH ALLGÄUER STALLBAU KG, D-86807 Buchloe (DE)
(72) Erfinder: Beutlrock, Erwin, W-8938 Buchloe (DE); Lang, Andreas, W-8938 Buchloe (DE)
(74) Vertreter: Kindermann, Manfred

(56) Entgegenhaltungen:
- DE-A- 2 202 196
- DE-A- 2 206 306
- DE-A- 3 603 300
- FR-A- 2 505 136

## Beschreibung

Die Erfindung betrifft eine Sperrboxenanordnung für Vieh, insbesondere für Schweine, mit in einer Gruppe nebeneinander angeordneter Boxen, von denen jede im Stallboden verankerte seitliche Begrenzungen, eine trogseitige Absperrung und eine eingangsseitige Schließvorrichtung aufweist, wobei eine Verriegelungseinheit zur Sperrung und Freigabe der Boxen vorgesehen ist, die wahlweise eine oder mehrere Boxen geöffnet und die anderen Boxen geschlossen hält.

Es ist bekannt, in Viehställen Sperrboxen zu verwenden, die in Gruppen nebeneinander angeordnet sind und über eine Schließvorvorrichtung einzeln oder gemeinsam geschlossen und geöffnet werden (DE-A-22 02 196, DE-A-23 18 723, und der gattungsgemäßen DE-U-72 05 046). Die Boxen sind dem Futterbarren benachbart, so daß sie von den Tieren zum Fressen aufgesucht werden. Bei geöffneten Boxen halten sich die Tiere gemeinsam im übrigen Stallbereich auf. Hierbei kommt es vor, daß sich die Tiere gegenseitig angreifen oder störend beeinflussen. Dies gilt insbesondere für Schweine. Die Folge ist eine Störung des Stallbetriebs, eine Herabsetzung des Wohlbefindens der Tiere und damit auch ihrer Nutzleistung. In besonderen Fällen können sich die Tiere auch gegenseitig verletzen oder sogar totbeißen. Die dadurch entstehenden Schäden sind erheblich.

Es sind auch Freß- und Liegeboxen für Vieh bekannt, die mit einer Selbstfangvorrichtung ausgestattet sind (DE-A-36 03 300). Wenn die Tiere die Boxen aufsuchen, betätigen sie Auslösehebel, die eine Einsperrvorrichtung wirksam machen. Das Öffnen der Einsperrvorrichtung erfolgt durch Handbetätigung gemeinsam für eine Gruppe nebeneinander angeordneter Boxen.

Aufgabe der Erfindung ist es, eine Sperrboxenanordnung zu schaffen, durch die der Schutz der Tiere verbessert und eine automatische Vereinzelung der sich außerhalb der Boxen aufhaltenden Tiere ermöglicht wird. Die Aufgabe wird durch die im Anspruch 1 gekennzeichneten Merkmale gelöst.

Die Sperrboxenanordnung gestattet einen selbsttätigen Einsperrund Freigabebetrieb für eine Gruppe von Schweinen. Zu einem bestimmten Zeitpunkt ist nur jeweils eine Box geöffnet, während alle anderen geschlossen sind. Es ist daher nur jeweils ein Tier frei, während alle anderen Tiere eingesperrt bleiben. Sucht dieses eine Tier die offene Box auf, wird diese geschlossen und zugleich einem beliebigen der anderen Tiere die Möglichkeit gegeben, seine Box zu verlassen. Auf diese Weise hat jedes Tier Auslaufmöglichkeit unter Vermeidung einer gegenseitigen Störung der Tiere. Die Erfahrung hat gezeigt, daß jedes Tier sich nur eine begrenzte Zeit im gemeinsamen Stallbereich außerhalb der Boxen aufhält und danach von selbst wieder in seine Box zurückkehrt, an die es gewöhnt ist und in der es sich wohlfühlt. Durch die Anordnung wird daher sichergestellt, daß im Laufe des Tages jedes Tier die erforderliche Bewegungsfreiheit erhält, ohne daß dazu eine Beaufsichtigung erforderlich ist. Da jedes Tier seine eigene Box hat, ist eine individuelle Fütterung möglich, und Maßnahmen zur Einzelerkennung erübrigen sich.

Durch Weiterbildungen der Erfindung, wie sie in den Ansprüchen 15 und 21 gekennzeichnet sind, wird eine flexible Anpassung der Sperrboxenanordnung and die Erfordernisse der Tierhaltung ermöglicht. Eine Abstellvorrichtung und eine Zugangsvorrichtung gestatten es, selektiv in den automatischen Selbsteinsperr- und Selbstfreigabebetrieb einzugreifen. So können einzelne Boxen geschlossen bleiben, während dieser Betrieb für alle anderen Tiere unverändert weitergeführt wird. Hierdurch ist es zum Beispiel möglich, unruhige oder kranke Tiere dauernd eingesperrt zu halten. Es können auch einzelne Boxen manuell geöffnet werden, ohne daß dies den Selbsteinsperr- und Selbstfreigabebetrieb der anderen Boxen stört. Hierdurch können einzelne Tiere aus der Sperrboxenanordnung herausgenommen werden, zum Beispiel für eine tierärztliche Behandlung. Es können aber auch alle Boxen gemeinsam geschlossen gehalten werden, um zum Beispiel das Reinigen des Stalles zu erleichtern. Des weiteren können alle Boxen geöffnet werden, beispielsweise zum gemeinsamen Umbuchten der Schweine in einen anderen Stall.

Weitere Ausführungsarten der Erfindung sind in den abhängigen Ansprüchen 2 bis 14, 16 bis 20 und 22 bis 25 angegeben.

Nachfolgend ist die Erfindung anhand zweier Ausführungsbeispiele beschrieben. Es zeigen:
- Fig. 1: die Seitenansicht einer offenen Sperrbox, die zu einer Sperrboxenanordnung nach der Erfindung gehört,
- Fig. 2: eine Seitenansicht der Sperrbox nach Fig. 1 in geschlossener Stellung,
- Fig. 3: ein Draufsicht auf eine Verriegelungseinheit, wie sie gemäß der Erfindung in der Sperrboxenanordnung nach Fig. 1 und 2 Verwendung findet,
- Fig. 4: eine Schnittdarstellung der Verriegelungseinheit nach Fig. 3,
- Fig. 5: die Seitenansicht einer geschlossenen Sperrbox, die zu einer weiteren Ausführungsform der Sperrboxenanordnung nach der Erfindung gehört,
- Fig. 6: eine Seitenansicht der Sperrbox nach Fig. 5 in geöffneter Stellung,
- Fig. 7: eine Draufsicht auf eine Verriegelungseinheit mit Abstellvorrichtung, wie sie gemäß der Erfindung in der Sperrboxenanordnung nach Fig. 5 und 6 Verwendung findet,
- Fig. 8: einen Schnitt nach Linie B-B in Figur 7,
- Fig. 9: einen Schnitt nach Linie A-A in Figur 8,
- Fig. 10: eine Teilansicht der Schließvorrichtung mit entkoppelter Boxentür,
- Fig. 11: eine Draufsicht auf die Boxentür von Figur 10 und
- Fig. 12: eine Draufsicht auf die Boxentür von Figur 10 in geschlossener Stellung.

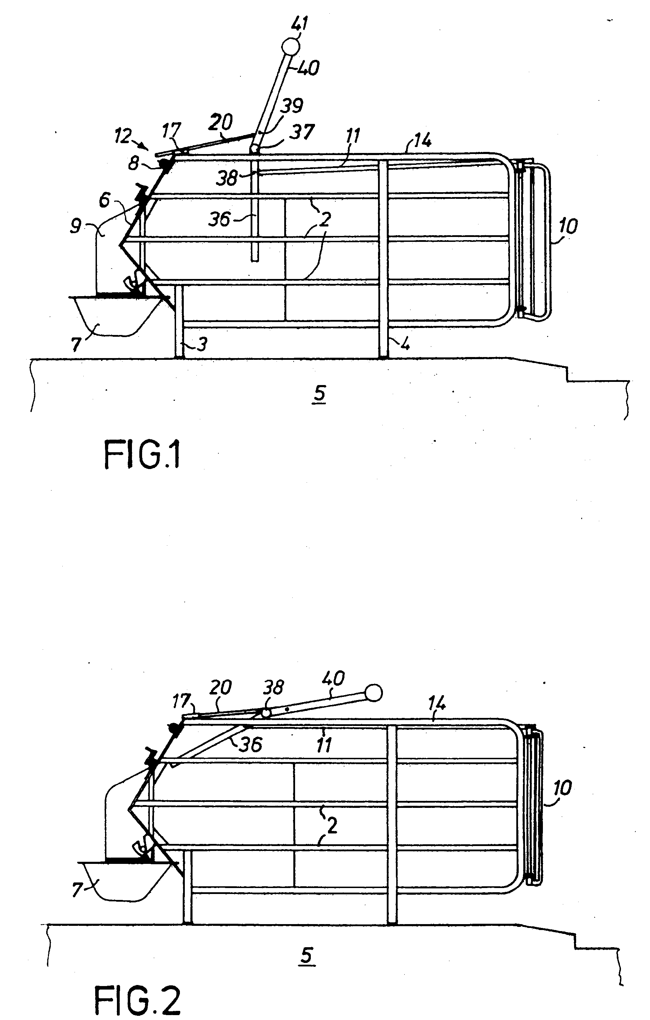

Die in den Figuren 1 bis 4 dargestellte Anordnung besteht aus einer Gruppe von sechs bis acht nebeneinander angeordneten Sperrboxen 1 für Schweine. Jede dieser Boxen 1 weist zwei als Gitter ausgebildete seitliche Begrenzungen 2 auf, die durch je zwei Pfosten 3 und 4 im Stallboden 5 fest verankert sind. Mit Ausnahme der beiden äußeren Boxen der Gruppe dient jede Begrenzung 2 zwei benachbarten Boxen als gemeinsames Trenngitter. Nach vorn sind die Boxen durch Absperrungen 6 begrenzt, die sich oberhalb eines Futtertrogs 7 befinden. Die Absperrungen 6 können um horizontale Achsen 8 schwenkbar angordnet sein, so daß sich der Futtertrog 7 einmal innerhalb und einmal außerhalb des Boxenrinnenraumes befindet. Trennbleche 9 zwischen den Boxen 1 im Bereich des Futtertrogs 7 verhindern, daß sich die Tiere beim Fressen gegenseitig stören.

Auf der Eingagsseite weist jede Box 1 eine Schließeinrichtung 10 auf, die aus einer zweiflügeligen, als Gitter ausgebildeten Tür besteht und über ein Gestänge 11 betätigt wird. Mit Hilfe der Schließeinrichtungen 10 können die Boxen 1 jeweils einzeln geschlossen und geöffnet werden. Außerhalb der Boxen befindet sich ein nicht dargestellter, vom übrigen Stall abgetrennter Raum, den ein Tier aufsuchen kann, beispielsweise um abzukoten, wenn seine Box geöffnet wird.

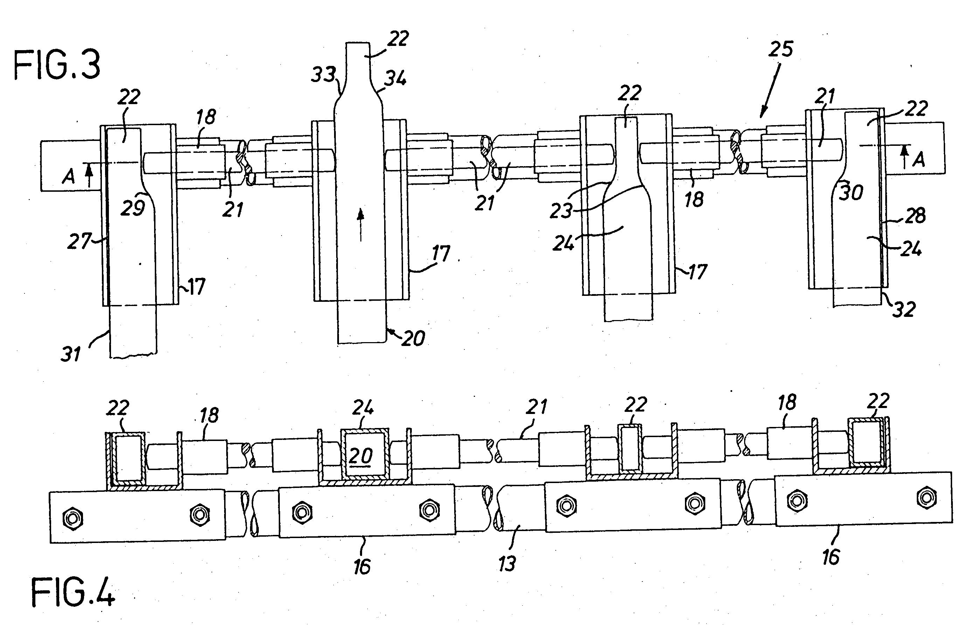

Die Boxenanordnung weist eine Veriegelungseinheit 12 auf, die in den Figuren 3 und 4 im Detail dargestellt ist. Sie besteht aus einem Längsholm 13, der am oberen Rand 14 der seitlichen Begrenzungen 2 und zwar an deren trogseitigen Enden befestigt ist und sich über alle Boxen 1 der Gruppe erstreckt. Am Längsholm 13 sind mittels Muffen 16 jeweils in Boxenmitte schachtartige Führungen 17 angeordnet, die ein in Längsrichtung der Boxen ausgerichtetes U-Profil aufweisen. Auf dem Grund des U-Profils liegen Sperrglieder 20 durch ihr Eigengewicht auf, die in Längsrichtung in den Führungen 17 verschiebbar sind. An den Seitenwänden der Führungen 17 sind Lager 18 für Abstandsstangen 21 angeordnet. Jede Abstandsstange 21 überbrückt den Abstand bis zur Führung 17 der benachbarten Box 1. Die Abstandsstangen 21 sind axial verschiebbar und liegen mit ihren Enden an den Sperrgliedern 20 an.

Die Sperrglieder 20 sind als Vierkantrohre ausgebildet. Sie weisen an ihren Enden einen schmalen Abschnitt 22 auf, der über Abschrägungen 23 in einen breiten Abschnitt 24 übergeht. Die Abstandsstangen 21 und die Sperrglieder 20 liegen in einer Reihe 25 und füllen den Abstand zwischen zwei ortsfesten Anschlägen 27 und 28 aus, die durch je eine Seitenwandung der Führungen 17 der beiden randseitigen Boxen 1 der Gruppe gebildet werden. Die Sperrglieder 20 dieser Boxen weisen je eine einseitige Abschrägung 29, 30 zwischen ihrem breiten Abschnitt 24 und ihrem schmalen Abschnitt 22 auf, so daß diese Sperrglieder mit ihren geradlinigen Kanten 31 und 32 an den Anschlägen 27 bzw. 28 anliegen. Alle anderen Sperglieder 20 besitzen je zwei symmetrische Abschrägungen 33, 34 zwischen ihren breiten und ihren schmalen Abschnitten 24 und 22. Die breiten Abschnitte 24 aller Sperrglieder 20 haben jeweils die gleiche Abmessung und ebenso sind die schmalen Abschnitte aller Sperrglieder in ihren seitlichen Abmessungen gleich. Die Anordnung ist so getroffen, daß jeweils der breite Abschnitt 24 eines Sperrgliedes 20 und die schmalen Abschnitte 22 aller anderen Sperrglieder der Gruppe zusammen mit allen Abstandsstangen 21 den Abstand zwischen den ortsfesten Anschlägen 27 und 28 ausfüllen. Wird der breite Abschnitt 24 dieses einen Sperrgliedes 20 aus der Reihe von Sperrgliedern und Abstandsstangen herausgeschoben, so daß stattdessen der schmale Abschnitt 22 dieses Sperrgliedes 20 zwischen die beiden anliegenden Abstandsstangen 21 gelangt, entsteht in der Reihe 25 ein freier Raum von der Breite eines Sperrglieds, in den ein anderes Sperrglied 20 mit seinem breiten Abstand 24 geschoben werden kann.

Ein Auslösehebel 36, der um eine am oberen Rand 14 der seitlichen Begrenzungen 2 angordnete Achse 37 schwenkbar ist, ragt in den Boxeninnenraum. Der Auslösehebel 36 ist unterhalb seiner Schwenkachse 37 über ein Gelenk 38 mit dem Gestänge 11 zur Betätigung der Schließvorrichtung 10 der jeweiligen Box verbunden. Des weitern ist er oberhalb seiner Schwenkachse 37 über ein Gelenk 39 mit dem Sperrglied 20 der jeweiligen Box verbunden. Der Auslösehebel 36 weist eine Verlängerung 40 nach oben auf, an der ein Ausgleichsgewicht 41 angebracht ist.

Vor Beginn des regulären Betriebs der dargestellten Sperrboxenanordnung werden die Tiere in die Boxen gebracht. Lediglich ein Tier beibt frei und dementsprechend eine Box unbelegt. Die Auslösehebel 36 werden hierzu von Hand entsprechend verschwenkt, um die Schließvorrichtung zu öffnen und nach Einlassen eines Tieres wieder in den geschlossen Zustand zu bringen. Um zu vermeiden, daß dieser Vorgang durch die Verriegelungseinheit 12 behindert wird, werden die Sperrglieder 20 aus ihren Führungen 17 nach oben herausgeschwenkt.

Wenn das außerhalb der Boxen befindliche Tier die offene Box aufsucht, um am Futtertrog 7 zu fressen, verschwenkt es den Auslösehebel 36. Hierbei wird einerseits die Schließvorrichtung 10 betätigt und damit die Box geschlossen und andererseits das Sperrglied 20 zurückgezogen, so daß sein schmaler Bereich zwischen die benachbarten Abstandsstangen 21 zu liegen kommt. Die letztere Bewegung schafft einen freien Raum innerhalb der Reihe von Sperrgliedern 20 und Abstandsstangen 21, so daß eines der in den anderen Boxen befindlichen Tiere seine Box öffnen und nach hinten verlassen kann. Dabei kann es sich um ein beliebiges Tier handeln. Mit dem Öffnen der Box wird zugleich über das Gestänge 11 der Auslösehebel 36 in seine aufrechte Stellung verschwenkt und das mit ihm verbundene Sperrglied 20 mit seinem breiten Abschnitt 24 zwischen die Abstandsstangen 21 vorgeschoben. Hierdurch werden die Abstandsstangen 21 ihrerseits axial verschoben, so daß der freie Raum in der Reihe von Sperrgliedern und Abstandsstangen wieder ausgefüllt ist und die geschlossenen Boxen blockiert sind, bis das außerhalb der Boxen befindliche Tier die nun geöffnete Box aufsucht.

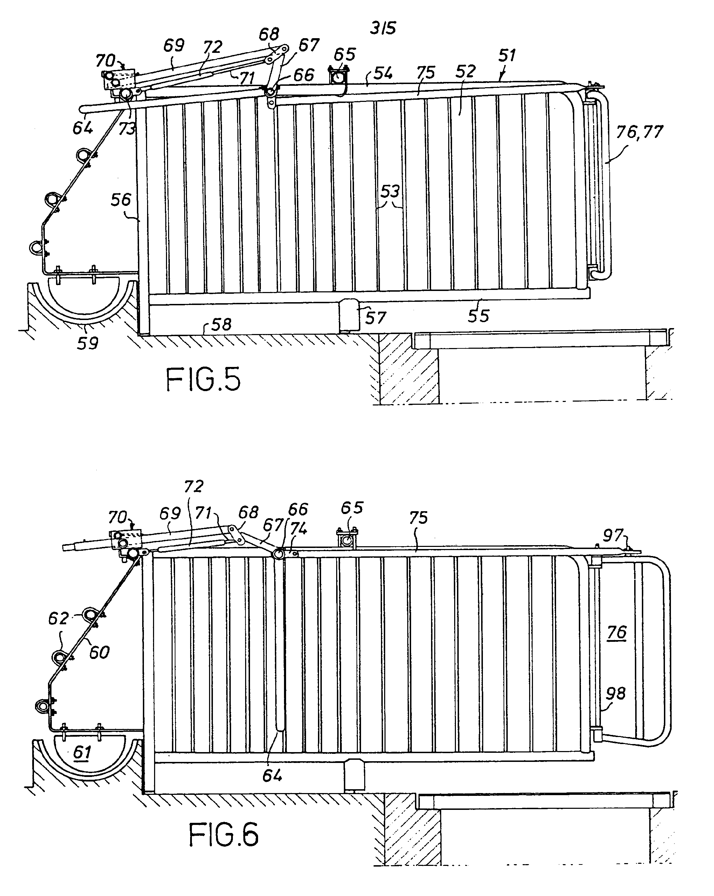

Die in den Figuren 5 bis 9 dargestellte weitere Ausführungsform der Erfindung ermöglicht eine erleichterte Bedienung und eine bessere Anpassung der Sperrboxenanordnung an die Größe der Tiere und an die Notwendigkeiten des Stallbetriebs. Die in den Figuren 5 bis 9 dargestellte Anordnung besteht aus einer Gruppe von drei bis zwölf nebeneinander angeordneten Sperrboxen 51, die den Sperrboxen 1 ähnlich sind. Zum Unterschied von diesen weisen die als seitliche Begrenzungen dienenden Gitter 52 der Boxen 51 senkrechte Gitterstäbe 53 auf, die zwischen oberen und unteren Längsrohren 54, 55 angeordnet sind. Der barrenseitige Abschluß wird durch je ein Standrohr 56 gebildet, das ebenso wie ein etwa mittig am unteren Längsrohr angreifender Pfosten 57 im Stallboden 58 verankert ist. Vor dem Standrohr 56 ist ein Futterbarren 59 angeordnet, über dem sich an den Gittern 52 befestigte Ausleger 60 befinden, die Trogtrenner 61 tragen und nach vorn durch Rohre 62 abgesperrt sind. Mit den oberen Längsrohren 54 aller Boxen ist ein sich quer über diese erstreckendes Rohr 65 angeordnet, das die Gitter 52 stabisliert. Jede Box 51 ist mit einem bügelförmig ausgebildeten Auslösehebel 64 ausgestattet, der um eine am oberen Längsrohr 54 gelagerte Achse 66 schwenkbar ist. Er weist einen winklig nach oben ragenden Hebelarm 67 auf, an dessen Ende eine Lasche 68 befestigt ist, die sich beiderseits des Hebelarms schräg zu diesem erstreckt. Das eine Ende der Lasche 68 ist mit einem Sperrglied 69 gelenkig verbunden, das dem Sperrglied 20 der Anordnung von Figur 1 entspricht und in der dort beschriebenen Weise mit einer Verriegelungseinheit 70 zusammenwirkt, die der Verriegelungseinheit 12 gemäß Figuren 1, 3 und 4 entspricht. Das andere Ende der Lasche 68 ist mit dem Kolben einer für sich bekannten Gasdruckfeder 71 gelenkig verbunden, deren Zylinder 72 mit einem ortsfesten, sich quer über alle Boxen erstreckenden Rohr 73 gelenkig verbunden ist. Der Auslösehebel 64 weist ferner auf der dem Hebelarm 67 entgegengesetzten Seite eine Verlängerung 74 auf, mit der ein Gestänge 75 gelenkig verbunden ist, das dem Gestänge 11 von Figur 1 entspricht und mit einer als Gitter ausgebildeten Flügeltür 76,77 ebenfalls gelenkig verbunden ist.

Bei einer von dem die Box aufsuchenden Tier verursachten Verschwenkung des Auslösehebels 64 wird die Gasdruckfeder zunächst zusammengepreßt, bis das Gelenk zwischen der Feder und der Lasche 68 seinen Totpunkt erreicht hat. Beim Weiterverschwenken des Auslösehebel 64 über diesen Totpunkt hinaus unterstützt die Gasdruckfeder 71 diese Bewegung und bringt schließlich den Auslösehebel 64 in die in Figur 5 gezeichnete Lage, ohne daß hieran das in der Box befindliche Tier noch beteiligt ist. Die gleiche Wirkung tritt ein, wenn ein Tier eine entriegelte Box verläßt und dabei die Türen 76,77 der Schließeinrichtung öffnet. Auch hierbei unterstützt die Gasdruckfeder 71 nach überschreiten des Totpunktes über den Auslösehebel 64 und das Gestänge 75 die Öffnungsbewegung der Tür, so daß diese vollständig geöffnet wird. Die Gasdruckfeder 71 hat eine dämpfende Wirkung auf die Bewegung des Auslösehebels und der mit ihm gekoppelten Teile, unabhängig davon, ob dieser in die Schließstellung (Figur 5) oder in die Öffnungsstellung (Figur 6) bewegt wird. Hierdurch werden Prellungen beim Erreichen der Endstellung vermieden.

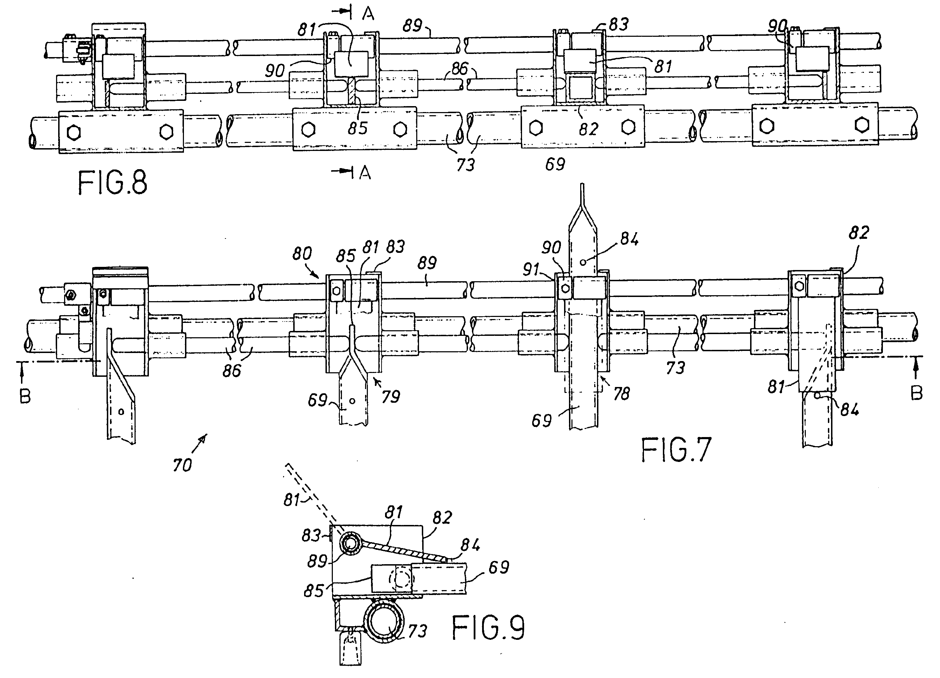

Durch die Verschwenkung des Auslösehebels 64 wird das Sperrglied 69 aus der in Figur 7 bei 78 dargestellten Stellung in eine in Figur 7 bei 79 dargestellten Stellung zurückgezogen, wodurch die Verriegelungseinheit 70 in der oben in Verbindung mit der Anordnung nach den Figuren 1 bis 4 beschriebenen Weise eine andere Box zum Öffnen freigibt. Gleichzeitig wird über das Gestänge 75 die Flügeltür 76,77 geschlossen und damit das Schwein in der Box eingesperrt.

Die Verriegelungseinheit 70 weist eine Abstellvorrichtung 80 auf, durch die der Selbstfreigabemechanismus für eine Box oder für mehrere oder alle Boxen abgeschaltet werden kann. Hierzu ist für jede Box 51 eine Abstellklappe 81 vorgesehen, die in einer Führung 82 schwenkbar gelagert ist (Figur 9). Diese Führung entspricht der Führung 17 in der Anordnung nach Fig. 1 bis 4. In Ruhestellung liegt die Klappe 81 an einem Anschlag 83 an, der an der Führung 82 angebracht ist (strichlierte Stellung in Figur 9). Soll eine Box abgestellt werden, wird die Klappe 81 in Bezug auf Figur 9 im Uhrzeigersinn verschwenkt, so daß sie durch ihr Eigengewicht auf dem Sperrglied 69 der betreffenden Box aufliegt und mit einem aus diesem Sperrglied nach oben herausragenden Sperrstift 84 zusammenwirkt. Wenn das Sperrglied 69 in der beschriebenen Weise in die Position 79 (Fig.7) gebracht worden ist, fällt die Klappe 81 hinter den Sperrstift 84 (Figur 9) und verhindert damit ein erneutes Verschieben des Sperrglieds 69 in die Position 78. Das Sperrglied 69 bleibt somit in Position 79, so daß für die abgestellte Box stets der schmale Abschnitt 85 zwischen Abstandsstangen 86, die den Abstandsstangen 21 der Anordnung von Fig. 1 bis 4 entsprechen, verbleibt, unabhängig davon, ob das Sperrglied 69 einer anderen Box in die Position 78 verschoben wird oder nicht, d.h. unabhängig davon, ob ein anderes Tier seine Box verläßt. Die Selbstfreigabefunktion bleibt somit auch dann, wenn eine oder mehrere der Boxen durch Verschwenken der Klappe 81 in die in Figur 9 gezeigte Stellung abgestellt sind, für alle anderen Boxen unverändert wirksam.

Um eine gemeinsame Abstellung mehrer Boxen 51 zu ermöglichen, ist vorzugsweise eine Sammelbetätigungsstange 89 vorgesehen, die sich parallel zum Rohr 73 quer über die gesamte Sperrboxenanordnung erstreckt und bei 91 in den Führungen 82 axial verdrehbar gelagert ist. Die Stange 89 ist zugleich die Schwenkachse der Abstellklappen 81. Sie trägt für jede Box 51 einen Nocken 90, der mit der zugeordneten Abstellklappe 81 in Eingriff geht. Der Nocken 90 ist so ausgebildet, daß er unter der Klappe 81 liegt und bei einer Verdrehung der Stange 89 im entgegengesetzten Uhrzeigersinn in Bezug auf Figur 9 mittels einer nicht dargestellten Abstellervorrichtung die Klappe 81 anhebt. Dies geschieht für die Klappen 81 aller Boxen gleichzeitig, die damit für den normalen Selbsteinsperr- und Selbstfreigabebetrieb eingestellt sind. Soll dagegen ein solcher Betrieb verhindert werden und die eingesperrten Tiere eingesperrt bleiben, zugleich aber die Einsperrfunktion für die zu diesem Zeitpunkt offene Box aufrechterhalten werden, wird die Stange 89 in entgegengesetzter Richtung, also in Bezug auf Figur 9 im Uhrzeigersinn, verdreht. Dadurch werden die Klappen 81 aller Boxen 51 abgesenkt, so daß sie auf den Sperrgliedern 69 zur Auflage kommen, und zwar bei den geschlossenen Boxen von der Barrenseite her gesehen jeweils vor dem Sperrstift 84 und bei er offenen Box hinter dem Sperrstift 84.In dieser Position können die Flügeltüren 76,77 der geschlossenen Boxen über den durch die Klappen 81 und über die Sperrglieder 69 blockierten Hebel 64,74 und das Gestänge 75 nicht geöffnet werden, aber die zu dieser Zeit offene Flügeltür 76,77 über den nicht blockierten Hebel 64,74 und das zugeordnete Gestänge 75 geschlossen werden, wenn ein Tier diese Box aufsucht. Die Sperrboxenanordnung wird vorzugsweise in diesen Einstellzustand gebracht, wenn der Stall gesäubert werden soll oder wenn im Stall Baumaßnahmen durchzuführen sind.

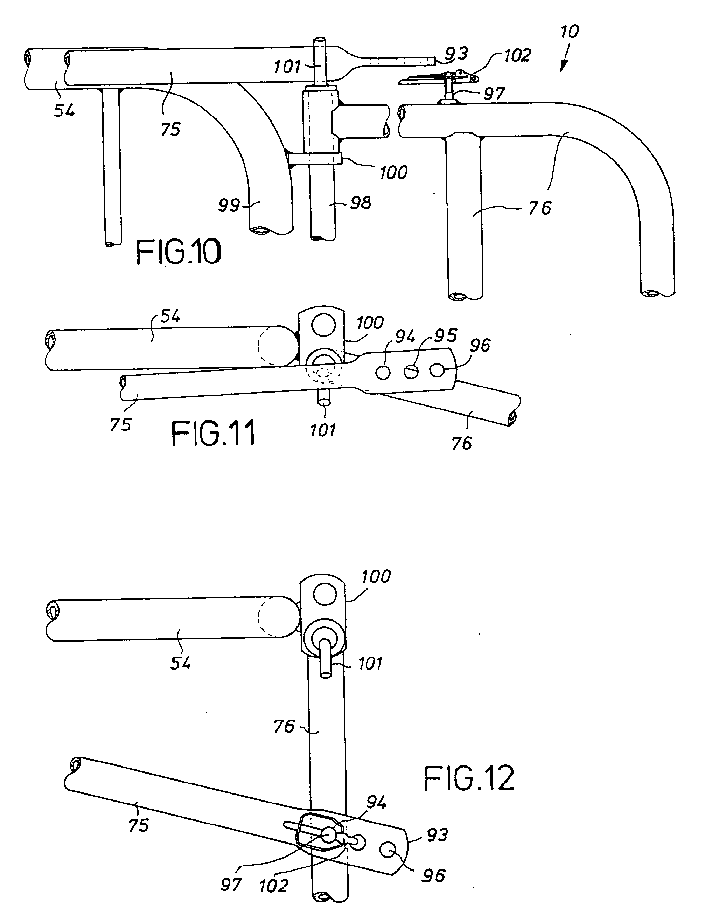

Die Flügeltüren 76,77 sind mit dem Gestänge 75 lösbar und verstellbar verbunden. Zu diesem Zweck sind die freien Enden 93 des Gestänges 75 plattgepreßt und mit in Richtung seiner Längsachse hintereinander liegenden Bohrungen 94,95,96 versehen, in die wahlweise ein an der Flügeltür 76 oder 77 befestigter Bolzen 97 eingreift, der durch einen Klappsplint 102 gesichert wird. Die Flügeltüren 76,77, von denen in Figur 11 nur eine dargestellt ist, sind spiegelsymmetrisch ausgebildet und um vertikale Achsen 98 schwenkbar, deren Lager an der eingangseitigen Begrenzung der Boxen 51 befestigt sind. Als Lager dienen an der Boxenbegrenzung 99 angeschweißte Platten 100, von denen jede die Achsen 98 der beiden benachbarten Flügeltüren zweier nebeneinanderliegender Boxen 51 aufnimmt. Die Achsen 98 besitzen Verlängerungen 101 nach oben, die in Richtung zum Lager der gegenüberliegenden Flügeltür der gleichen Box schräg abgewinkelt sind. Diese Verlängerungen 101 dienen zur Ablage des Gestänges 75, wenn dieses mit dem Bolzen 97 außer Eingriff gebracht wurde. Das Gestänge 75 ruht dann zwischen der schrägen Verlängerung 101 und dem oberen Längsrohr 54 des Gitters 52. Dies ist in Figur 10 und Figur 11 dargestellt, die die Schließvorichtung in einer vom Gestänge entkoppelten Stellung zeigen. Eine solche Entkopplung gestattet eine Einzelfreigabe eines Tieres, zum Beispiel zum Zwecke einer tierärztlichen Behandlung, oder eine Freigabe aller Tiere, beispielsweise um diese für ein Umbuchten freizulassen.

Durch Auswahl einer Bohrung 94,95,96 zum Eingriff mit dem Bolzen 97 erfolgt eine Längenverstellung des Gestänges 75 und damit eine Einstellung des Öffnungswinkels der Tür, der je nach Tiergröße größer oder kleiner gewählt wird. Hierdurch wird sichergestellt, daß in jedem Fall eine Bewegung der Flügeltür 76,77 durch das die Box verlassende Tier und damit auch über das Gestänge 75 und den Hebel 74, 67 eine Verschiebung der Sperglieds 69 erfolgt. Unabhängig von der eingestellten Länge dient das Rohr 65 jeweils als Anlage des Gestänges 75 in geöffneter Stellung und damit zur Begrenzung der Öffnungsbewegung. In dieser Position (Figur 6) bilden das Gestänge 75 und die Verlängerung 74 am Auslösehebel 64 eine Gerade, wodurch die Tür 76,77 in der geöffneten Stellung gegen ein Schließen der Box von außen blockiert ist.

Durch die Längenverstellung kann die Box an unterschiedliche Tiergrößen angepaßt werden, ohne daß es dazu einer baulichen Abänderung der Boxen bedarf. Für große Tiere wird der Bolzen 97 in Eingriff mit der Bohrung 96 gebracht, so daß die Flügeltür auch im geschlossenen Zustand einen Spalt geöffnet bleibt. Bei Auswahl der Bohrung 95 wird dieser Spalt kleiner, wie es für Tiere durchschnittlicher Größe in Frage kommt, während die Bohrung 94 für kleine Tiere benutzt wird.

## Patentansprüche

1. Sperrboxenanordnung für Vieh, insbesondere Schweine, mit einer Gruppe nebeneinander angeordneter Boxen (1, 51), von denen jede im Stallboden verankerte seitliche Begrenzungen (2, 52), eine trogseitige Absperrung (6, 62) und eine eingangsseitige Schließvorrichtung (10, 76, 77) aufweist, wobei eine Verriegelungseinheit zur Sperrung und Freigabe der Boxen vorgesehen ist, die wahlweise eine oder mehrere Boxen geöffnet und die anderen Boxen geschlossen hält, dadurch gekennzeichnet, daß die Verriegelungseinheit (12, 70) zur wechselseitigen Sperrung und Freigabe der Boxen (1, 51) ausgebildet ist, so daß jeweils nur eine Box geöffnet ist und alle anderen geschlossen sind, und daß jede Box einen Auslösehebel (36, 64) aufweist, der von dem die Box aufsuchenden Tier bewegt wird und dadurch die Schließvorrichtung (10, 76) der betreffenden Box betätigt und die Verriegelungseinheit (12, 70) für das Öffnen einer anderen Box durch eines der darin befindlichen Tiere einstellt.

2. Anordnung nach Anspruch 1, dadurch gekennzeichnet, daß die Verriegelungseinheit (12, 70) für jede Box ein Sperrglied (20, 69) aufweist mit einem breiten Abschnitt (24), der über eine Schräge (23,29,30) in einen schmalen Abschnitt (22, 85) am Ende des Sperrglieds (20, 69) übergeht, und daß die Verriegelungseinheit (12, 70) außerhalb der Boxen verlaufende axial verschiebbare Abstandsstangen (21, 86) zwischen je zwei benachbarten Boxen aufweist, die mit dem breiten Abschnitt (24) des Sperrgliedes (20) von jeweils einer Box und den schmalen Abschnitten (22, 85) der Sperrglieder aller anderen Boxen in einer Reihe angeordnet sind und den Abstand zwischen zwei ortsfesten Anschlägen (27,28) ausfüllen, wobei die Sperrglieder (20, 69) zwischen den Abstandsstangen (21, 86) so beweglich sind, daß jeweils innerhalb der Reihe der breite Abschnitt (24) des einen Sperrglieds (20) durch dessen schmalen Abschnitt (22) und der schmale Abschnitt (22) eines anderen Sperrglieds (20) durch dessen breiten Abschnitt (24) ersetzt wird.

3. Anordnung nach Anspruch 1 oder 2, dadurch gekennzeichnet, daß die Auslösehebel (36, 64) oberhalb der Boxen angeordnet sind und nach unten in die Innenräume der Boxen ragen und daß jeder Auslösehebel (36, 64) einerseits über ein Gestänge (11, 75) mit der Schließvorrichtung (10, 76) und andererseits mit dem Sperrglied (20, 69) dieser Box verbunden ist.

4. Anordnung nach einem der Ansprüche 1 bis 3, dadurch gekennzeichnet, daß an den seitlichen Begrenzungen (2) der Boxen ein Längsholm (13, 73) angeordnet ist, der sich über alle Boxen der Gruppe erstreckt und an dem die Lager (18, 82) der Abstandsstangen (21, 86) angeordnet sind, die parallel zum Längsholm (13, 73) verlaufen.

5. Anordnung nach einem der Ansprüche 2 bis 4, dadurch gekennzeichnet, daß die ortsfesten Anschläge (27,28) am Längsholm (13) befestigt sind.

6. Anordnung nach einem der Ansprüche 4 bis 5, dadurch gekennzeichnet, daß am Längsholm (13, 73) für jede Box eine Führung (17, 82) im Bereich der Boxenmitte angeordnet ist, die ein in Längsrichtung der Box ausgerichtetes U-Profil aufweist, in deren Seitenwänden Lager (18) für je eine Abstandsstange (21, 86) angeordnet sind und auf deren Grund die Sperrglieder (20, 69) durch ihr Eigengewicht aufliegen.

7. Anordnung nach einem der Ansprüche 4 bis 6, dadurch gekennzeichnet, daß der Längsholm (13, 73) am oberen Rand (14) der seitlichen Begrenzungen (2) an deren trogseitigen Enden befestigt ist.

8. Anordnung nach einem der Ansprüche 2 bis 7, dadurch gekennzeichnet, daß die Sperrglieder (20) als Rohre ausgebildet sind, von denen jedes zwischen den Enden von zwei Abstandsstangen (21) in der zugeordneten Führung (17) verschiebbar ist, und daß die Sperrglieder (20) der randseitigen Boxen der Gruppe einseitig und die der übrigen Boxen beidseitig über Abschrägungen (23,29, 30,33,34) in einen schmalen Endbereich (22) übergehen, der jeweils bei geschlossener Box zwischen den Abstandsstangen (21) liegt.

9. Anordnung nach einem der Ansprüche 2 bis 8, dadurch gekennzeichnet, daß die Sperrglieder (20, 69) Vierkantprofil aufweisen, das an seinen freien Enden auf die Breite des schmalen Abschnitts (22, 85) zusammengepreßt ist.

10. Anordnung nach einem der Ansprüche 6 bis 9, dadurch gekennzeichnet, daß die Sperrglieder (20) aus den Führungen (17) nach oben herausschwenkbar sind.

11. Anordnung nach einem der Ansprüche 3 bis 10, dadurch gekennzeichnet, daß der Auslösehebel (36, 64) auf einer quer zur Längsausdehnung der Box verlaufenden und am oberen Rand (14, 54) der seitlichen Begrenzung (2, 52) angeordneten Achse (37, 73) gelagert ist und daß das zur Schließvorrichtung (10, 76) führende Gestänge (11, 75) unterhalb der Achse (37, 73) und das Sperrglied (20, 69) oberhalb der Achse (37, 73) über Gelenke (38,39) mit dem Auslösehebel (36, 64) verbunden sind.

12. Anordnung nach einem der Ansprüche 1 bis 11, dadurch gekennzeichnet, daß der Auslösehebel (36) nach oben eine Verlängerung (40) aufweist, die ein Ausgleichsgewicht (41) trägt.

13. Anordnung nach einem der Ansprüche 4 bis 11, dadurch gekennzeichnet, daß zwischen dem Auslösehebel (64) und dem Längsholm (13) eine Druckfeder (71) angeordnet ist, die an einem Hebelarm (67) des Auslösehebels (64) angreift, der während seiner Bewegung die Druckfeder jeweils über einen Totpunkt führt, so daß der von ihr ausgeübte Druck zunächst die Box im eingestellten Zustand hält und nach einer durch das Tier bewirkten Anfangsbewegung durch Verschwenken des Auslösehebels oder durch Öffnen der Schließvorrichtung (76) nach Passieren des Totpunktes diese Bewegung unterstützt und durch den Druck der Feder ohne weitere Einwirkung des Tieres zuendeführt.

14. Anordnung nach Anspruch 13, dadurch gekennzeichnet, daß die Druckfeder (71) als Gasdruckfeder ausgebildet ist, die eine Dämpfungswirkung auf die Bewegung des Auslösehebels (64) und der Schließvorrichtung (76) ausübt und Prellungen in der jeweiligen Endstellung verhindert.

15. Anordnung nach einem der Ansprüche 1 bis 14, dadurch gekennzeichnet, daß die Boxen (51) mit einer Abstellvorrichtung (80) ausgestattet sind, die in Arbeitsstellung eine Einstellung der Verriegelungseinheit zum Öffnen der betreffenden Box verhindert, so daß zwar ein vom Tier betätigtes Schließen der Box, nicht aber das nachfolgende Öffnen derselben durch das eingesperrte Tier zugelassen wird.

16. Anordnung nach Anspruch 15, dadurch gekennzeichnet, daß die Abstellvorrichtung (80) eine Klappe (81) aufweist, die an der Führung (82) des Sperrglieds (69) schwenkbar gelagert ist, und daß am Sperrglied ein Vorsprung (84) angeordnet ist, mit dem die Klappe (81) in Eingriff geht, wenn die Box in Schließstellung gebracht wird, und der eine Rückverschiebung des Sperrglieds (69) in die Öffnungsstellung verhindert.

17. Anordnung nach Anspruch 16, gekennzeichnet durch einen Anschlag (83), an dem die Klappe (81) zur Anlage kommt, nachdem sie in ihre vom Sperrglied (69) entfernte Ruhestellung gebracht worden ist, in der sie den normalen Selbsteinsperr- und Selbstfreigabebetrieb der Anordnung gestattet.

18. Anordnung nach einem der Ansprüche 15 bis 17, dadurch gekennzeichnet, daß eine Sammelbetätitungsstange (89) vorgesehen ist, die sich über alle Boxen (51) der Anordnung erstreckt und axial verdrehbar gelagert ist und die für jede Box einen Nocken (90) trägt, der mit der Abstellvorrichtung (80) derart in Eingriff steht, daß durch eine Verdrehung der Sammelbetätigungsstange (89) die Abstellvorrichtungen aller Boxen gleichzeitig unwirksam oder erneut wirksam gemacht werden.

19. Anordnung nach Anspruch 18, dadurch gekennzeichnet, daß der Nocken (90) mit der Klappe (81) in Eingriff steht und diese bei einer Verdrehung der Sammelbetätigungsstange (89) in einer ersten Drehrichtung vom zugeordneten Sperrglied (69) entfernt und bei einer Verdrehung in entgegengesetzter Richtung zur Auflage auf dem Sperrglied bringt.

20. Anordnung nach Anspruch 19, dadurch gekennzeichnet, daß die Sammelbetätigungsstange (89) in den Führungen (82) der Sperrglieder (69) gelagert ist.

21. Anordnung nach einem der Ansprüche 3 bis 20, dadurch gekennzeichnet, daß das vom Auslösehebel (64) zur Schließvorrichtung (10) führende Gestänge (11) mit einer Längenverstelleinrichtung (94 bis 97) versehen ist, die es gestattet, den Öffnungswinkel der Schließvorrichtung zu verändern.

22. Anordnung nach einem der Ansprüche 3 bis 21, dadurch gekennzeichnet, daß die Schließvorrichtung (10) aus zwei Schwingflügeltüren (76,77) besteht, die auf an den eingangsseitigen Boxenbegrenzungen (99) befestigten Achsen (98) gelagert sind und über eine Stiftverbindung (94 bis 97) mit dem Gestänge (75) lösbar verbunden ist.

23. Anordnung nach einem der Ansprüche 3 bis 22, dadurch gekennzeichnet, daß an den freien Enden (93) des Gestänges (75) in dessen Längsausdehnung hintereinander mehrere Bohrungen (94,95,96) angeordnet sind, die mit einem Bolzen (97) wahlweise in Eingriff bringbar sind.

24. Anordnung nach einem der Ansprüche 3 bis 23, dadurch gekennzeichnet, daß an den oberen Enden der Achsen (98) schräg zueinander verlaufende Verlängerungen (101) aufweisen, die zur Halterung der Gestängeteile (75) dienen, wenn diese von den Schwingflügeltüren (76,77) gelöst sind.

25. Anordnung nach einem der Ansprüche 3 bis 24, dadurch gekennzeichnet, daß das Gestänge (75) mit dem Auslösehebel (64) über eine an diesem angeordnete Verlängerung (74) gelenkig verbunden ist und daß im geöffneten Zustand der Schwingflügeltüren (76,77) das Gestänge und die Verlängerung eine Gerade bilden, so daß die Türen (76,77) gegen ein Schließen von der Boxenaußenseite blockiert sind.

## Claims

1. Blocking box arrangement for livestock, especially hogs, having a group of boxes (1, 51) located side by side each of which comprising lateral limitations (2, 52), a trough sided shutoff (6, 62) and an entrance sided closing device (10, 76,77), wherein a locking unit is provided for closing and opening of the boxes which keeps selectively one or more boxes open and the other boxes closed, characterized in that the locking unit (12, 70) is arranged for a mutual blocking and unblocking the boxes (1, 51) in a manner that at a certain point of time only one box is open and all other boxes are closed, and that each box comprises a release lever (36, 64) which is operated by the animal entering the box whereby activating the closing device (10, 76,77) of this box and setting the locking unit (12, 70) for having opened another box by the animal located therein.

2. Arrangement according to claim 1, characterized in that the locking unit (12, 70) comprises a bar element (20, 69) having a wide section (24) which proceeds via a slanted portion (23, 29, 30) to a small section (22, 85) at the end of said bar element (20, 69), and that the locking unit (12, 70) comprises axialy shiftable distance rods (21, 85) arranged outside of the boxes and extending between adjacent boxes respectively, wherein said distance rods are arranged in a line with said wide section (24) of the bar element (20) of one of the boxes and said small sections (22, 85) of the bar elements of all other boxes, respectively, and fill in this arrangement the distance between two stationary stops (27, 28), wherein the bar elements (20, 69) between the distance rods are movable in a manner that in said line the wide section (24) of said one bar element is replaced by its small section (22) and the small section of another bar element is replaced by its wide section.

3. Arrangement according to claim 1 or 2, characterized in that the release levers (36, 64) are arranged above the boxes and that each release lever (36, 64) is at one side connected via a linkage (11, 75) with the closing device (10, 76, 77) and at the other side connected with the bar element (20, 69) of the same box.

4. Arrangement according to one of the claims 1 to 3, characterized in that a longitudinal spar (13, 73) is mounted on said lateral limitations (2) of the boxes extending over all boxes of the group and carrying the bearings (18, 82) of the distance rods (21, 86) which are arranged in parallel to the longitudinal spar.

5. Arrangement according to one of the claims 2 to 4, characterized in that said stationary stops (27, 28) are fixed to the longitudinal spar (13).

6. Arrangement according to one of the claims 4 to 5, characterized in that for each box a guidance (17, 82) is mounted on the longitudinal spar (13) in the area above the center of the box, said guidance comprises a U-profil aligned in longitudinal direction of the box, wherein the side walls of the U-profil carry bearings (18) of one of the distance rods (21, 86) repectively, and the bar elements (20, 69) are laying by their weight on the ground of the U-profil.

7. Arrangement according to one of the claims 4 to 6, characterized in that the longitudinal spar (13) is fixed to the upper margin (14) of the lateral limitations (2) at their trough sided ends.

8. Arrangement according to one of the claims 2 to 7, characterized in that the bar elements (20) are formed of tubes each of which is in its corresponding guidance shiftable between the ends of two of said distance bars (21), and that the bar elements (20) proceed to their small end section (22) by asymmetrically slanted portions for the margin boxes of the group and by symmetrically slanted portions for the other boxes wherein the small section of any box is placed between the distance rods (21) respectively while that box is closed.

9. Arrangement according to one of the claims 2 to 8, characterized in that the bar elements (20, 69) comprise a square shaped profil which at its free end is compressed to the dimension of the small end section (22).

10. Arrangement according to one of the claims 6 to 9, characterized in that the bar elements (20) are pivoted in a manner to allow turning upwards out of the guidance (17).

11. Arrangement according to one of the claims 3 to 10, characterized in that the release lever (36, 64) is pivoted on an axis (37, 73) extending transversaly to the boxes and fixed to the upper margin (14) of said lateral limitations (2), and that the linkage (11, 75) leading to the closing device (10, 76,77) is connected to the release lever (36, 64) by a joint (38) located below the axis (37, 73) and the bar element (20, 39) is connected to said release lever (36, 64) by a joint (39) located above said axis.

12. Arrangement according to one of the claims 1 to 11, characterized in that the release lever (36, 64) comprises an upper extension (40) carrying a balance weight (41).

13. Arrangement according to one of the claims 4 to 11, characterized in that a compression spring (71) is arranged between the release lever (64) and the longitudinal spar (13, 73), wherein said spring is engaged with an arm (67) of said release lever which during its movement leads said spring over its dead center effecting that the pressure exercised by said spring first keeps the box in the position set and after an initial movement caused through the animal by rotating said release lever or by opening the closing device (76) and after passing the dead center supports this movement and completes it without further interaction of the animal.

14. Arrangement according to claim 13, characterized in that the compression spring (71) is a gas pressure spring which applies a damping effect to the movement of the release lever (64) and the closing device (76) to prevent bouncing in their respective end positions.

15. Arrangement according to one of the claims 1 to 14, characterized in that the boxes (51) comprises a detaching device (80) which in working position prevents a setting of the locking unit (12, 70) for opening the corresponing box whereby an animal operated closing of the box is permitted but not the subsequent opening of this box by the locked animal.

16. Arrangement according to claim 15, characterized in that the detaching device (80) comprises a flap (81) which is pivoted on the guidance (82) of the bar element (69), and that the bar element comprises an extension (84) to which the flap is engaged when the box is set in closing position to prevent a shift of said bar element back to the opening position.

17. Arrangement according to claim 16, characterized by a stop (83) to which said flap (81) is engaged after it is brought in its resting position in which it is removed from said bar element (69) permitting the normal self-locking and self-releasing operation of the arrangement.

18. Arrangement according to one of the claims 15 to 17, characterized in that it comprises a collective operation rod (89) extenting over all boxes (51) and rotatable mounted, said rod carrying a cam (90) which is engaged with the detaching device (80) in a manner that by rotating said rod (89) the detaching devices of all boxes are simultaneously set in an inoperative position or reset in its operative position.

19. Arrangement according to claim 18, characterized in that the cam (90) is engaged with said flap (81) to lift it from the related bar element (69) when the collective operation rod (89) is rotated in a first direction and to bring it in contact with said bar element when said rod is rotated in the opposite direction.

20. Arrangement according to claim 19, characterized in that the guidances (82) of the bar elements (69) serve as bearings of the collective operation rod (89).

21. Arrangement according to one of the claims 3 to 20, characterized in that the linkage (11) connecting the release lever (64) with the closing device (10) comprises a length adaptation device (94 to 97) permitting to modify the opening angle of the closing device.

22. Arrangement according to one of the claims 3 to 21, characterized in that the closing device (10) consits of two wings of a swing door (76, 77) which are pivoted on hinges (98) fixed at entrance sided parts of the box limitations (99) and which are by a pin connection (94 to 97) detachable connected with said linkage (75).

23. Arrangement according to one of the claims 3 to 22, characterized in that the free ends (93) of the linkage (75) comprises a number of holes (94, 95, 96) which are aligned with the longitudinal dimension of said linkage and are selectively engagable with a pin (97).

24. Arrangement according to one of the claims 3 to 23, characterized in that the upper ends of said hinges (98) comprises extensions (101) which are slanted toward each other and which serve as support of the linkage rods (75) when they are detached from the wings of said swing door (76, 77).

25. Arrangement according to one of the claims 3 to 24, characterized in that the linkage (75) is hingedly connected to an extension (74) of said release lever (64) which forms a straight line with said linkage when said swing door occupies its opened position blocking the wings (76, 77) against closing from outside of the box.

## Revendications

1. Groupe de compartiments à verrouiller pour bétail, en particulier pour porcs, constitué de compartiments placés de front (1, 51), chacun de ces compartiments présentant des délimitations latérales ancrées dans le sol de l'étable (2, 52), un verrouillage sur le côté de l'auge (6, 62) ainsi qu'un dispositif de fermeture sur le côté de l'entrée (10, 76, 77), une unité de verrouillage étant prévue pour le blocage et déblocage des compartiments, maintenant optionnellement un ou plusieurs compartiments en position ouverte et les autres en position fermée,
caractérisé par le fait
. que l'unité de verrouillage (12, 70) est prévue pour la fermeture et l'ouverture en alternance des compartiments (1, 51), si bien qu'un seul compartiment est ouvert et tous les autres fermés, et
. que chaque compartiment est muni d'un levier de déclenchement (36, 64), qui est mis en action par la bête pénétrant dans le compartiment concerné, y déclenchant ainsi le dispositif de fermeture (10, 76) et actionnant ainsi l'unité de verrouillage (12, 70) pour l'ouverture d'un autre compartiment par l'une des bêtes s'y trouvant.

2. Structure selon Revendication 1, caractérisée par le fait
. que l'unité de verrouillage (12, 70) pour chaque compartiment comporte un élément de blocage (20, 69) avec une partie large (24) donnant, au bout de l'éIémemt de blocage, (20, 69) sur une partie étroite (22, 85) par l'intermédiaire d'un biais (23, 29, 30), et par le fait
. que l'unité de verrouillage (12, 70) présente des barres d'écartement (21, 86) à l'extérieur des compartiments , décalables axialement, entre un groupe de deux compartiments voisins, disposées en un rang avec la partie large (24) de l'élément de blocage (20) d'un des compartiments et les parties étroites (22, 85) des éléments de blocage de tous les autres compartiments et remplissant l'écart entre deux butées fixes (27, 28), les éléments de blocage (20, 69) entre les barres d'écartement (21, 86) étant mobiles de telle façon, que dans chaque rangée, la partie large (24) de l'un des éléments de blocage (20) est remplacée par sa partie étroite (22), et la partie étroite (22) d'un autre élément de blocage (20) par sa partie large (24).

3. Structure selon Revendication 1 ou 2, caractérisée par le fait
. que les leviers de déclenchement (36, 64) sont disposés au haut des compartiments et s'insèrent vers le bas dans l'intérieur des compartiments et
. que chaque levier de déclenchement (36, 64) est relié d'une part par une tige (11, 75) avec le dispositif de fermeture (10, 76) et d'autre part avec l'élément de blocage (20, 69) de ce compartiment.

4. Structure selon l'une des Revendications de 1 à 3, caractérisée par le fait
. qu'un longeron (13, 73) est disposé aux délimitations latérales (2), et qui s'étend sur tous les compartiments du groupe, et auquel sont disposés les paliers (18, 82) des barres d'écartement (21, 86) qui sont parallèles au longeron (13, 73).

5. Structure selon l'une des Revendications 2 à 4, caractérisée par le fait
. que les butées fixes (27, 28) sont fixées au longeron (13).

6. Structure selon l'une des Revendications 4 à 5, caractérisée par le fait
. qu'une glissière de guidage (17, 82) est fixée au longeron (13, 73) pour chaque compartiment dans la zone centrale du compartiment, présentant un profilé en U orienté dans le sens longitudinal du compartiment, dans les parois latérales de laquelle sont disposés les paliers (18) pour chacune des barres d'écartement (21, 86) et sur le fond de laquelle les éléments de blocage (20, 69) reposent par leur poids propre.

7. Structure selon l'une des Revendications 4 à 6, caractérisée par le fait
. que le longeron (13, 73) est fixé au bord supérieur (14) des délimitations latérales (2), sur les extrémités de celles-ci du côté de l'auge.

8. Structure selon l'une des Revendications de 2 à 7, caractérisée par le fait
. que les éléments de blocage (20) sont réalisés sous forme de tubes, chacun d'eux étant mobile entre les extrémités de deux barres d'écartement (21) dans la glissière de guidage correspondante, et
. que les éléments de blocage (20) donnent, pour les compartiments extérieurs du groupe d'un côté, et pour les autres compartiments des deux côtés, par des biais (23, 29, 30, 33, 34) sur une zone finale étroite (22), se trouvant, dans le cas du compartiment fermé, entre les barres d'écartement (21).

9. Structure selon l'une des Revendications de 2 à 8, caractérisée par le fait
. que les éléments de blocage (20, 69) présentent un profil 4 pans, qui est, à ses libres extrémités, pressé contre la largeur de la partie étroite (22, 85).

10. Structure selon l'une des Revendications de 6 à 9, caractérisée par le fait
. que les éléments de blocage (20) sont pivotables vers le haut en-dehors des glissières de guidage (17).

11. Structure selon l'une des Revendications de 3 à 10, caractérisée par le fait
. que le levier de déclenchement (36, 64) est logé sur un axe passant transversalement à l'étendue longitudinale du compartiment et disposé sur le bord supérieur (14, 54) de la délimitation latérale (2, 52) et
. que la tige (11, 75) menant au dispositif de fermeture (10, 76) en-dessous de l'axe (37, 73) et l'élément de blocage (20, 69) au-dessus de l'axe (37, 73) sont reliés avec le levier de déclenchement (36, 64) par des articulations (38, 39).

12. Structure selon l'une des Revendications de 1 à 11, caractérisée par le fait
. que le levier de déclenchement (36) présente une prolongation (40) vers le haut supportant un contrepoids (41).

13. Structure selon l'une des Revendications de 4 à 11, caractérisée par le fait
. qu'entre le levier de déclenchement (64) et le longeron (13) se trouve un ressort à presssion (71), qui agit sur un bras (67) du levier de déclenchement (64) menant à chaque fois le ressort à pression au cours de son mouvement au-delà d'un point mort, si bien que la pression qu'exerce le ressort maintient tout d'abord l'état, et, lorsque la bête à déclenché un mouvement initial de pivotement du levier de déclenchement ou d'ouverture du dispositif de fermeture (76), soutient ce mouvement après le franchissement du point mort et le parachève par la pression du ressort sans autre intervention de la bête,

14. Structure selon Revendication 13, caractérisée par le fait
. que le ressort à pression est conçu comme ressort à pression pneumatique (71), qui exerce une action amortissante sur le mouvement du levier de déclenchement (64) et du dispositif de fermeture (76) et évite ainsi des rebondissements en position finale.

15. Structure selon l'une des Revendications 1 à 14, caractérisée par le fait
. que les compartiments (51) sont équipés d'un dispositif d'arrêt (80), qui évite - pendant la position de travail - une mise en marche de l'unité de verrouillage pour l'ouverture du compartiment concerné, qui, bien que permettant la fermeture d'un compartiment actionnée par une bête, évite l'ouverture consécutive du même compartiment par la bête enfermée.

16. Structure selon Revendication 15, caractérisée par le fait
. que le dispositif d'arrêt (80) présente un clapet pivotant (81) , logé sur la glissière de guidage (82) de l'élément de blocage (69) et
. qu'un ergot (84) est aménagé sur l'élément de blocage, sur lequel le clapet (81) prend, lorsque le compartiment est mis en position de fermeture, et qui évite un retour de l'élément de blocage (69) en position d'ouverture.

17. Structure selon Revendication 16, caractérisée par
. une butée (83) sur laquelle accoste le clapet (81), après avoir été mise dans sa position de repos, enlevée par l'élément de blocage (69), et dans laquelle elle permet le fonctionnement normal d'autofermeture et d'autoouverture du groupe.

18. Structure selon l'une des Revendications de 15 à 17, caractérisée par le fait
. qu'une barre de maneuvre collective (89) est prévue, qui s'étend sur tous les compartiments (51) du groupe et est logée de façon à pouvoir pivoter axialement, et qui présente pour chaque compartiment un ergot (90), se trouvant de telle façon en prise avec le dispotif d'arrêt (80), que, par une torsion de la barre de manoeuvre collective (89), les dispositifs d'arrêt de tous les compartiments sont rendus inactifs simultanément ou à nouveau rendus actifs.

19. Structure selon Revendication 18, caractérisée par le fait
. que l'ergot (90) se trouve en prise avec le clapet (81), et éloigne celui-ci de l'élément de blocage correspondant (69) lors d'une torsion de la barre de manoeuvre collective (89) dans un premier sens de rotation, et le ramène sur l'élément de blocage par un mouvement de torsion dans le sens contraire.

20. Structure selon Revendication 19, caractérisée par le fait
. que la barre de manoeuvre colective (89) est logée dans les glissières de guidage (82) des éléments de blocage (69).

21. Structure selon Revendications 3 à 20, caractérisée par le fait
. que la tige (11) menant du levier de déclenchement (64) au dispositif de fermeture (10) est munie d'un dispositif de réglage en longueur (94 à 97) permettant de modifier l'angle d'ouverture du dispositif der fermeture .

22. Structure selon Revendications 3 à 21, caractérisée par le fait
. que le dispositif de fermeture (10) est composé de deux portes battantes (76, 77), qui sont montées sur les axes (98) fixées aux délimitations des compartiments du côté de l'entrée (99) et reliées à la tige (75) par une jonction à goupilles amovible (94 à 97).

23. Structure selon Revendications 3 à 22, caractérisée par le fait
. qu'aux extrémités libres (93) de la tige (75), plusieurs perçages (94, 95, 96) sont disposés sur la longueur l'un derrière l'autre, pouvant entrer optionnellement en prise avec un goujon (97).

24. Structure selon Revendications 3 à 23, caractérisée par le fait
. que des prolongements allant obliquement l'un vers l'autre se trouvent aux extrémités supérieures des axes (98), et servent au soutien des parties de la tige, lorsque celles-ci sont dégagées des portes battantes (76, 77).

25. Structure selon Revendications 3 à 24, caractérisée par le fait
. que la tige (75) est reliée de façon articulée avec le levier de déclenchement (64) par l'intermédiaire d'un prolongement(74) fixé à celui-ci et
. qu'en position ouverte des portes battantes (76, 77), la tige et le prolongement forment une droite, si bien que les portes (76, 77) sont bloquées contre une fermeture de l'extérieur des compartiments.
